**Europäisches Patentamt**

**European Patent Office**

**Office européen des brevets**

(19)

(11) Veröffentlichungsnummer: **0 084 117**
**B1**

(12) # EUROPÄISCHE PATENTSCHRIFT

(45) Veröffentlichungstag der Patentschrift:
18.03.87

(51) Int. Cl.⁴: **B 23 D 77/02**

(21) Anmeldenummer: **82111414.7**

(22) Anmeldetag: **09.12.82**

(54) **Einschneiden-Reibahle mit Rundschneide.**

(30) Priorität: **15.01.82 DE 3201137**

(43) Veröffentlichungstag der Anmeldung:
**27.07.83 Patentblatt 83/30**

(45) Bekanntmachung des Hinweises auf die Patenterteilung:
**18.03.87 Patentblatt 87/12**

(84) Benannte Vertragsstaaten:
**AT BE CH DE FR GB IT LI NL SE**

(56) Entgegenhaltungen:
**FR-A-1 556 424**
**GB-A-1 029 476**
**US-A-3 213 716**

(73) Patentinhaber: **MAPAL Fabrik für Präzisionswerkzeuge Dr. Kress KG, Obere Bahnstrasse 13 Postfach 1520, D-7060 Aalen (DE)**

(72) Erfinder: **Kress, Dieter, Dr. Dipl.- Ing, Walkstrasse 87, D-7060 Aalen (DE)**
Erfinder: **Häberle, Friedrich, Fliederstrasse 14, D-7081 Lauchheim (DE)**

(74) Vertreter: **Patentanwälte Dr. Ing. Eugen Maier Dr. Ing. Eckhard Wolf, Pischekstrasse 19, D-7000 Stuttgart 1 (DE)**

EP 0 084 117 B1

LIBER, STOCKHOLM 1987

## Beschreibung

Die Erfindung betrifft eine Einschneiden-Reibahle der die Merkmale des Oberbegriffs des Patentanspruchs 1 aufweisenden Gattung.

An Reibahlen wird die Forderung gestellt, daß sich der Messerkopf trotz meist verhältnismäßig großer Auskraglänge beim Anschneiden der Bohrung selbst zentriert. Bei Mehrschneiden-Reibahlen, bei denen der Anschnittpunkt der einzelnen Schneiden in axialer Richtung gesehen in einer Ebene liegt, so daß die Messer gleichzeitig zu schneiden beginnen, ist die vorgenannte Forderung automatisch erfüllt.

Bei Einschneiden-Reibahlen mit einer eine Rechteckform aufweisenden Wendeplatte entsprechen die Anschnittwinkel der Schneide auch bei einem Doppelanschnitt den Anschnittwinkeln der Führungsleisten.

Aus der DE-PS 16 27 221 ist eine Einschneiden-Reibahle mit einem eine kreisförmige Schneidkante aufweisenden Messer und zwei symmetrisch zur Mittelachse des Messerkopfes angeordneten Führungsleisten bekannt. Bei dieser Reibahle sind das Messer und die Führungsleisten an einem Träger angeordnet, der im Werkzeugkörper senkrecht zur Werkzeugachse verschiebbar gelagert ist. Dadurch ist gewährleistet, daß sich die von dem Messer und den beiden Führungsleisten gebildeten drei Berührungspunkte zwischen dem Messerkopf und dem Werkstück automatisch auf eine zur Achse der Reibahle konzentrische Lage einstellen, so daß die Bohrung konzentrisch angeschnitten wird. Dieser Reibahle haftet jedoch der Nachteil an, daß eine exakte Durchmessermessung nicht möglich ist, und insbesondere der weitere Nachteil, daß bei dieser Anordnung der Führungsleisten im Verhältnis zum Messer eine exakte Rundheit mit einer unterhalb eines Wertes von ca. 5μm liegenden Abweichung, wie sie bei Präzisionsbohrungen gefordert wird, nicht erreichbar ist.

Der Erfindung liegt die Aufgabe zugrunde, bei einer Einschneiden-Reibahle der im Oberbegriff des Anspruchs 1 angegebenen Art die Führungsleisten so auszubilden, daß ein selbsttätiges zentrisches Anschneiden einer Bohrung und eine exakte Rundheit der geriebenen Bohrung gewährleistet ist. Dies wird durch die Mittel erreicht, die das kennzeichnende Merkmal des Anspruchs 1 und vorteilhafterweise die kennzeichnenden Merkmale der Unteransprüche bilden.

Schneidet die erfindungsgemäße Reibahle eine Bohrung mit z.B. einer Schnitt-Tiefe von 0,25 mm an, so kommt zunächst die gegenüber den Führungsleisten eine Voreilung aufweisende Schneide in Eingriff. Unter der Einwirkung der Schnittkraft wird die Reibahle aus ihrer zentrischen Lage kurzzeitig und zwar so lange ausgelenkt, bis die Führungsleisten mit ihrer ersten Schräge an dem in der Bohrung entstehenden Einlaufkegel anliegen, wodurch die Schneide radial abgedrängt und der Messerkopf zentriert wird. Auf diese Weise werden günstige Bedingungen für den Anschnitt einer Bohrung geschaffen und die häufig beim Anschneiden auftretende Gefahr des Ratterns vermieden.

In der Zeichnung ist ein Ausführungsbeispiel der Erfindung in schematischer Weise dargestellt. Es zeigen

Fig. 1 eine Seitenansicht des Messerkopfes,

Fig. 2 eine Stirnseitenansicht des Messerkopfes,

Fig. 3 einen axialen Schnitt durch eine Bohrung mit dem Messerkopf in der Phase des Anschnitts.

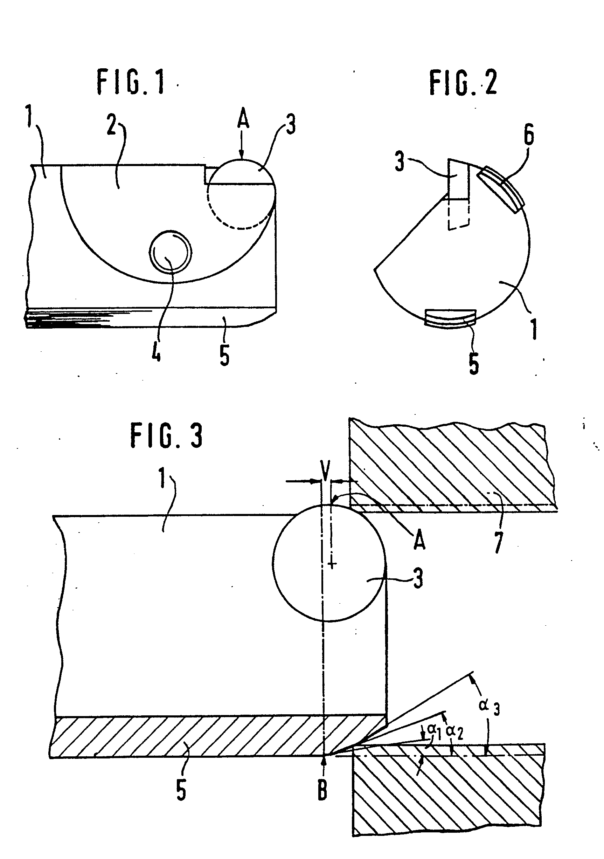

Der Messerkopf 1 weist eine mittels einer Spannpratze 2 gegen eine Schulter des Messerkopfes angepresste kreisrunde Messerplatte 3 auf. Die Anpressung erfolgt mittels eines Gewindebolzens 4. Am Umfang des Messerkopfes sind in diesen die Führungsleisten 5 und 6 eingelassen. Wie aus Fig. 3 ersichtlich ist, liegt der Scheitelpunkt A des über den Umfang des Messerkopfes überstehenden Schneidenbereichs in axialer Richtung um den Betrag V vor dem Punkt B, an dem die erste Schräge an die achsenparallele Fläche der Führungsleiste 5 angrenzt. Diese erste, mit der Bohrungswandung des Werkstücks 7 einen Winkel $\alpha$ 1 bildende Schräge erstreckt sich mindestens bis zu der den Punkt A aufweisenden Radialebene. An diese erste Schräge schließen sich zwei weitere Schrägen mit den Winkeln $\alpha$ 2 und $\alpha$ 3 an.

## Patentansprüche

1. Einschneiden-Reibahle mit einer eine Rundschneide aufweisenden, von einer Spannpratze (2) gegen eine Schulter des Messerkopfes gepreßten Messerplatte (3) und zwei am Umfang des Messerkopfes angeordneten Führungsleisten (5, 6), dadurch gekennzeichnet, daß die Messerplatte (3) eine kreisrunde Schneide mit einem Durchmesser von 5 bis 8 mm ist und die Führungsleisten (5, 6), von denen die eine in bekannter Weise der Schneide (3) diametral gegenüber und die andere um etwa 40° in Drehrichtung hinter der Schneide (3) angeordnet ist, an ihrem vorderen Ende eine Schräge mit einem Winkel $\alpha_1 < 10°$, vorzugsweise 3 bis 5° aufweist, deren denselben radialen Abstand wie der in radialer Richtung weisende Scheitelpunkt (A) der kreisrunden Messerplatte (3) aufweisende Anschnittpunkt (B) in axialer Richtung etwa 0,4 mm hinter diesem Scheitelpunkt (A) zurückliegt.

2. Einschneiden-Reibahle nach Anspruch 1, dadurch gekennzeichnet, daß die Führungsleisten (5, 6) im Anschnittbereich der kreisrunden Messerplatte (3) eine zweite Schräge mit einem Winkel $\alpha_2 > 15°$ und $< 25°$ aufweisen.

3. Einschneiden-Reibahle nach einem der Ansprüche 1 und 2, dadurch gekennzeichnet, daß die Führungsleisten (5, 6) an ihrem vorderen Ende eine dritte Schräge mit einem Winkel $\alpha_3 > 30°$ und $< 75°$ aufweisen.

**Claims**

1. A single blade reamer with a knife blade (3) having a circular cutting edge, pressed by a clamp (2) against a shoulder of the tool head, and two guide strips (5, 6) arranged on the periphery of the tool head, characterised in that the knife blade (3) is a circular blade with a diameter of 5 to 8mm and the guide strips (5, 6), of which the one is arranged in known manner diametrically opposite the blade (3) and the other is arranged some 40° in the direction of rotation behind the blade (3), have at their forward ends a bevel with an angle $\alpha$, $< 10°$, preferably 3 to 5°, of which, at the same radial distance as the vertex (A) in the radial direction of the circular knife blade (3) the intersection (B) lies behind this vertex (A) some 0.4mm in the axial direction.

2. A single blade reamer according to claim 1, characterised in that the guide strips (5, 6) in the region where they intersect the circular knife blade 17 have a second bevel with an angle $\alpha_2 > 15°$ and $< 25°$.

3. A single blade reamer according to one of claims 1 and 2, characterised in that the guide strips (5, 6) have at their forward ends a third bevel with an angle $\alpha_3 > 30°$ and $< 75°$.

**Revendications**

1. - Alésoir à une lame avec une plaquette de coupe (3) constituée par une lame circulaire et appliquée par une griffe de serrage (2) contre un épaulement de la tête porte-lame, et deux baguettes de guidage (5, 6) disposées sur la périphérie de la tête porte-lame, caractérisé en ce que la plaquette de coupe (3) est une lame circulaire ayant un diamètre de 5 à 8 mm et que les baguettes de guidage (5, 6), dont l'une est de façon connue diamétralement opposée à la lame (3) et l'autre est décalée d'environ 40° en arrière de la lame (3) dans le sens de la rotation, comportent à leur extrémité avant un biseau faisant avec l'axe un angle $\alpha_1 < 10°$, de préférence compris entre 3 et 5°, le point d'attaque (B) de ces baguettes, qui se trouve radialement à la même distance de l'axe que le sommet (A) de la lame de coupe circulaire (3), étant décalé d'environ 0,4 mm axialement vers l'arrière par rapport à ce sommet (A).

2. - Alésoir à une lame selon la revendication 1, caractérisé en ce que les baguettes de guidage (5, 6) comportent dans la zone d'attaque de la plaquette de coupe circulaire (3) un second biseau faisant un angle $\alpha_2 > 15°$ et $< 25°$.

3. - Alésoir à une lame selon l'une des revendications 1 et 2, caractérisé en ce que les baguettes de guidage (5, 6) comportent à leur extrémité antérieure un troisième biseau faisant un angle $\alpha_3 > 30°$ et $< 75°$.

# FIG.1

# FIG.2

# FIG.3